Europäisches Patentamt

(19) European Patent Office

Office européen des brevets

(11) Publication number: **0 287 345**
**A1**

## (12) EUROPEAN PATENT APPLICATION

(21) Application number: **88303311.0**

(22) Date of filing: **13.04.88**

(51) Int. Cl.⁴: **C 03 C 3/076**
C 03 C 21/00, C 03 C 3/093

(30) Priority: **16.04.87 JP 91879/87**
**22.05.87 JP 123860/87**

(43) Date of publication of application:
**19.10.88 Bulletin 88/42**

(84) Designated Contracting States: **DE FR GB NL**

(71) Applicant: **CANON KABUSHIKI KAISHA**
**30-2, 3-chome, Shimomaruko**
**Ohta-ku Tokyo (JP)**

(72) Inventor: **Shingaki, Seiichi**
**B-203 Radon-city 1976-1 Tsurumaki**
**Hadano-shi Kanagawa-ken (JP)**

**Nakata, Kohei**
**301 Wako-Azamino§299-2 Edacho**
**Yokohama-shi§Kanagawa-ken (JP)**

**Serizawa, Takashi**
**203 Puraimu-house 6-20-10 Kamitsuruma**
**Sagamihara-shi Kanagawa-ken (JP)**

**Tomono, Haruo**
**101 Copo-Tamagawa 5-7-12 Suge, Tama-ku**
**Kawasaki-shi Kanagawa-ken (JP)**

(74) Representative: **Beresford, Keith Denis Lewis et al**
**BERESFORD & Co. 2-5 Warwick Court High Holborn**
**London WC1R 5DJ (GB)**

(54) **Glass composition for and method for preparation of gradient index lens.**

(57) A glass composition suitable for providing gradient index lenses by the ion-exchange process is disclosed. The glass composition comprises the following components at the respectively specified proportions in terms of percents by mol: $LiO_2$ 3 - 22 %, $Na_2O$ 0 - 20 %, $K_2O$ 0 - 20 % (with proviso that $Na_2O + K_2O$ = 3 - 20 %), $Al_2O_3$ 0 - 20 %, $B_2O_3$ 0 - 25 %, $TiO_2$ 2 - 25 %, $SiO_2$ 40 - 62 %, $ZrO_2$ 3 - 10 %, $GeO2$ 0 - 20 %, MgO 0 - 20 %, $SnO_2$ 0 - 10 %, and PbO 0 - 15 %. $TiO_2$ is effective for providing a large refractive index difference and $ZrO_2$ is effective for providing an improved chemical resistance. The glass composition can further contain $Ta_2O_5$ or $Nb_2O_5$ as a component for replacing a part of $TiO_2$ and increasing the refractive index difference without increasing the dispersion of the lens.

EP 0 287 345 A1

## Description

## GLASS COMPOSITION FOR AND METHOD FOR PREPARATION OF GRADIENT INDEX LENS

### FIELD OF THE INVENTION AND RELATED ART

The present invention relates to a glass composition, particularly a glass composition suitable for preparation of gradient index lenses by the ion exchange process. The present invention also relates to a method of preparing a gradient index lens by using such a glass composition and a gradient index lens obtained thereby.

A transparent cylindrical body having a refractive index gradient or distribution of almost the square gradient in the radius direction from the central axis toward the circumferential surface functions as a lens and is well known as a gradient index lens.

The gradient index lens is used by grinding its end surfaces to form flat faces perpendicular to the optical axis. The gradient index lens is singly used generally as a member for optical communication or used in a large number arranged in close parallel with each other to form a lens array which is widely used as a coupling element in copying machines and facsimile machines.

The ion exchange process is well known as a process for industrially producing gradient index lenses. According to the process, a glass body containing a monovalent cation source, such as Tl, Cs, Li or Rb, is soaked in a bath of molten salt such as sodium nitrate to cause ion exchange between monovalent cations, e.g., between $Tl^+$ and $Na^+$, thereby to produce a refractive index gradient.

Hitherto, a gradient index lens containing Tl or Cs has been frequently studied. A gradient index lens containing Tl can have a large angular aperture $\theta$ on the order of 20° but entails a very large chromatic aberration. On the other hand, a lens containing Cs has a relatively small chromatic aberration but entails a difficulty of a small angular aperture of about 6° at the maximum. These difficulties have posed serious problems in connection with necessity of large aperture and high resolution of the above-type of lenses for providing high performances of copying and facsimile machines in recent years.

Incidentally, the refractive index gradient or distribution in the radial direction of a lens produced in this way is expressed approximately by the following equation:

$$n = n_0 \cdot (1-(A/2) \cdot r^2),$$

wherein $n_0$ = refractive index on the central axis, A = refractive index distribution coefficient, and r = a radial distance from the central axis. And the angular aperture $\theta$ is defined by the following equation;

$$\sin\theta = n_0 \cdot \sqrt{A} \bullet r_0,$$

wherein $r_0$ = the radius of the lens.

In view of the above-mentioned problems of the conventional gradient index lenses containing Tl or Cs, a Li-containing glass has been studied frequently in recent years. In the case of this glass, when subjected to ion exchange in a molten salt bath of sodium nitrate, it provides a product having a smaller chromatic aberration than the Cs-containing glass and an angular aperture of about 9° - 12° (JP-A (Tokkai) 58-125632, JP-B (Tokko) 59-41934).

However, the angular aperture of a lens obtained from a conventional Li-containing glass is not sufficient as yet, and it has become necessary to develop a glass composition providing a larger angular aperture, in other words, a larger refractive index difference.

Further, a conventional Li-containing glass contains a large proportion of alkali metal, so that it has a poor chemical resistance and it involves defects such that it is liable to be eroded by molten salt at the time of ion exchange and the abraded or polished end faces of a lens obtained therefrom are liable to cause weathering, i.e., the phenomenon of a glass surface being damaged because atmospheric dew attached to the glass surfaces dissolves the alkali components in the glass.

### SUMMARY OF THE INVENTION

An object of the present invention is to solve the above-mentioned defects of the conventional Li-containing glass composition for gradient index lenses and provides a glass composition which is better in chemical resistance and suitable for providing a gradient index lens having a larger angular aperture.

Another object of the present invention is to provide a glass composition suitable for providing a gradient index lens which has a refractive index gradient very close to an ideal one from the core to the circumference of its cylindrical form and has a large effective field diameter.

Another object of the present invention is to provide a glass composition suitable for providing a gradient index lens having a lower dispersion and better chemical resistance.

A further object of the present invention is to provide a method of producing a gradient index lens from such a glass composition.

A still further object of the present invention is to provide a gradient index lens obtained by such a method.

According to the present invention, there is provided a glass composition for gradient index lenses comprising the following components at the respectively specified proportions in terms of percents by mol:

$Li_2O$      3 - 22 %,

$Na_2O$      0 - 20 %,

$K_2O$      0 - 20 % (with proviso that $Na_2O$ + $K_2O$ = 3 - 20 %),

$Al_2O_3$    0 - 20 %,
$B_2O_3$    0 - 25 %,
$TiO_2$    2 - 25 %,
$SiO_2$    40 - 62 %,
$ZrO_2$    3 - 10 %,
$GeO_2$    0 - 20 %,
MgO    0 - 20 %,
$SnO_2$    0 - 10 %, and
PbO    0 - 15 %.

The glass composition according to the invention is principally characterized in that it contains 2 - 25 mol % of $TiO_2$ as a component for providing the resultant lens with a large refractive index difference and 3 - 10 mol % of $ZrO_2$ for providing an improved chemical resistance and providing a refractive index gradient close to an ideal one up to the circumferential part of the lens.

The above mentioned and other objects and features of the invention will be better understood upon consideration of the following detailed description concluding with specific examples of practice.

## DETAILED DESCRIPTION OF THE INVENTION

$Li_2O$ is a component for forming a refractive index gradient or distribution and is contained at 3 - 22 mol %. Below 3 mol % fails to provide a sufficient refractive index difference, and over 22 mol % causes devitrification. In order to provide a lens having an angular aperture of 9° or above, 8 mol % or more is desirable, and 20 mol % or less is preferred so that devitrification may be completely prevented to provide a good yield in glass formation.

$Na_2O$ and $K_2O$ are effective for enlarging the vitrification or glass-forming region and improving the fusibility of the glass composition, thus providing a low-viscosity melting state at a relatively low temperature. Further, $Na_2O$ in the glass composition in the case of the molten salt being a sodium salt and $K_2O$ in the glass composition in the case of the molten salt being a potassium salt respectively increase the driving force of ion exchange between $Li^+$ and $Na^+$ or $K^+$, and a larger content thereof provides a larger ion-exchange speed.

The total content of $Na_2O$ and $K_2O$ ($Na_2O + K_2O$) is 3 - 20 mol %. If the ($Na_2O + K_2O$) below 3 - 20 mol %, the ion-exchange speed is remarkably lowered, and above 20 mol % results in a low chemical resistance. Further, $K_2O$ in the glass composition in the case of the molten salt being a sodium salt and $Na_2O$ in the glass composition in the case of the molten salt being a potassium salt respectively hinder the ion exchange between $Li^+$ and $Na^+$ or $K^+$, so that they are desirably not co-present in the glass composition but can be co-present within an extent not adversely affecting the refractive index gradient formation.

$Al_2O_3$ and $B_2O_3$ are contained in proportions of up to 20 mol % and 25 mol %, respectively. Exceeding the above contents, $Al_2O_3$ increases the viscosity to make difficult the melting and formation of glass, and $B_2O_3$ lowers the chemical resistance.

$TiO_2$ is an essential component for enlarging the refractive index difference, and the effect thereof is considerably large in a Li-containing glass. Even if the Li content is the same, the refractive index difference can be different by several times between the cases of $TiO_2$ being contained and not contained. The effect of $TiO_2$ is particularly pronounced at 2 mol % or more. Over 25 mol % is liable to cause devitrification.

The above effect of $TiO_2$ of increasing the refractive index difference is gradually saturated above 8 mol %. For this reason, the addition of PbO and MgO with the upper limits of addition of 15 mol % and 20 mol %, respectively, is very effective in order to further increase the refractive index difference. Exceeding the upper limits, PbO results in an easily deformable glass product and causes a lowering in ion-exchange speed, and MgO is liable to cause devitrification and make difficult the formation of a glass product. Further, the addition of PbO and MgO is effective in removal of color aberration to realize a lens having a high angular aperture and low color aberration.

$SiO_2$ is a main component for formation of glass network. Below 40 mol % causes devitrification and a lowering in chemical resistance. Above 62 % suppresses the contents of the refractive index gradient-forming oxides and other oxides, thus failing to provide a sufficient refractive index difference. Above 62 % also causes an increase in viscosity and necessitates a high temperature for glass melting, thus results in a lowering in processability.

$ZrO_2$ is a characteristic component in the glass composition of the invention and is contained up to 10 % as the upper limit. Above the limit, devitrification is liable to occur.

$ZrO_2$ is effective in remarkably increasing the chemical resistance of the glass product, and particularly effective in preventing erosion with the molten salt during ion exchange. For example, when a glass rod not containing $ZrO_2$ and a glass rod containing $ZrO_2$ both with abraded or polished side circumferential surfaces were soaked in molten salt of sodium nitride kept at 500°C for 20 hours and then taken out, the circumferential surface of the former was converted into a matted surface having unevennesses of several tens of microns while that of the latter was substantially unchanged. The erosion of the glass surface with a molten salt results in irregularities in refractive index gradient in the circumferential part of a lens to considerably lower the effective field diameter of the lens. Further, the erosion of the glass surface results in poor symmetry of refractive index gradient and increased astigmatism, thus lowering the optical performances of the lens. The surface erosion further results in fine cracks which lead to a lowering in mechanical strength of the resultant lens. The above-mentioned difficulties can be solved by adding $ZrO_2$, thus making it possible to produce lenses having a large visual field at a high yield.

As for the content of $ZrO_2$, below 3 % fails to provide the above effect at a sufficient level, so that the content of 3 mol % or more is necessary and 4 mol % or more is desirable.

$SnO_2$ has a similar effect as $ZrO_2$ and further enhances the effect if it is contained up to 10 % as the upper limit. Above the upper limit, devitrification is liable to occur. As $SnO_2$ is a readily reducible component, it is usually desirable to melt the glass composition in an oxidizing atmosphere. When $SnO_2$ is contained at several mol % or more. The content of $SnO_2$ may be adjusted in connection with the contents of the other oxides, but about 1 - 5 mol % may generally provides a sufficient effect. Further, the total content of $ZrO_2$ and $SnO_2$ may desirably be 5 - 12 mol %, above which devitrification is liable to occur.

The addition of $ZrO_2$ and $SnO_2$ increases the chemical resistance of the lens after the ion exchange and also is effective in improving the weatherability of an optical device using the lens.

While the effect of $TiO_2$ of providing an increased refractive index difference essential for obtaining a lens with a large aperture, the increase in content thereof leads to an increase in dispersion. For this reason, $Ta_2O_5$ or $Nb_2O_5$ is contained up to the upper limit of 10 mol % as a component for increasing the refractive index difference while suppressing the increase in dispersion. Above the upper limit, the stability of the glass is lowered. The effect of suppressing the increase in dispersion is given in the order of $Ta_2O_5 > ; Nb_2O_5 \gg TiO_2$, and $Ta_2O_5$ and $Nb_2O_5$ may be added singly or in combination to obtain a sufficient effect. The total content of $Ta_2O_5$ and $Nb_2O_5$ may suitably be 1 - 15 mol %. Further, the total content of $TiO_2 + Ta_2O_5 + Nb_2O_5$ may suitably be 3 - 20 mol %. Less than 3 mol % is insufficient to give a sufficient effect of the addition and more than 32 mol % is liable to cause devitrification.

The glass composition of the invention can contain in addition to the above-mentioned components the following oxides in the respectively specified proportions in terms of mol %:

$CaO$ 0 - 6, $SrO$ 0 - 6, $BaO$ 0 - 5, $ZnO$ 0 - 5, $Rb_2O$ 0 - 5, $La_2O_3$ 0 - 5, $Y_2O_3$ 0 - 3, $Gd_2O_3$ 0 - 3, $Ga_2O_3$ 0 - 3, $In_2O_3$ 0 - 3, $GeO_2$ 0 - 3, $WO_3$ 0 - 3, $As_2O_3$ 0 - 3, $Sb_2O_3$ 0 - 3.

Other elements, such as Fe, Ag, Cu and so on can be contained as impurities but these elements are liable to lower the transmittance of the product lens. Accordingly, the contents of these impurity elements should be minimized.

According the method of the present invention, a gradient index lens may be produced by soaking a shaped body, preferably a cylinder, of the above-mentioned glass composition in a molten bath comprising a salt of a metal susceptible of ion exchange with Li. The metal salt may be selected as desired but may preferably be a salt of Na or K. During the ion exchange about 30 - 80 % of the content of $Li_2O$ is replaced by a substantially equal molar amount of the oxide of the metal to provide a refraction index gradient in a core-to-surface direction, particular in a radial direction. The change in $Li_2O$ content is measured as a whole, particularly as an average value over a cross sectional area perpendicular to a cylindrical axis.

The present invention will be further explained more specifically hereinbelow based on Examples and Comparative Examples.

Examples 1 - 6, Comparative Examples 1 - 2

Various starting materials were blended into 8 batches each providing one of the glass compositions of Examples 1 - 6 and Comparative Examples 1 and 2 shown in Table 1 appearing hereinafter in an amount of 8 kg each. Each batch was sufficiently mixed, melted for 2 hours in a 3-liter platinum crucible at 1350° C, cast and rapidly cooled to form a cullet. Then, the cullet was again charged in a similar 3-liter platinum crucible, re-melted at 1300° C for four hours and then cast into a uniform glass block free of bubbles and striae. A round glass rod of 20 mm in diameter and 200 mm in length was cut out from the glass block and stretched in a glass stretching furnace to form a 1 mm diameter rod sample.

The rod sample was soaked in a molten salt bath and subjected to ion exchange under the conditions shown in Table 1.

Through the above operation, gradient index lenses of Comparative Examples 1 and 2 and Examples 1 - 6 were obtained. The central refractive index and refractive index gradient of each lens were measured, and the angular aperture was calculated based on the values. Separately, the water resistance of each lens was measured as a representation of durability thereof. More specifically, each lens sample with abraded end surfaces was soaked in hot water at 90° C and the time at which precipitation of an alkali component, etc. was initially observed was measured. The results are also shown in Table 1.

As is clearly shown in Table 1, the lenses of Examples containing 3 mol % or more of $ZrO_2$ showed remarkably improved durability compared with those of Comparative Examples. Particularly, even when the $TiO_2$ content was increased in order to further increase the angular aperture, no deterioration in durability wax observed, whereby a lens having an angular aperture of 13° or above and also good chemical resistance could be obtained.

Further, the lenses of Examples gave a larger effective field diameter than those of Comparative Examples and showed a good image formation performance in the range of 90 % or more of the diameter. The lenses of Examples also showed a symmetrical refractive index gradient and substantially free of astigmatism.

Table 1

| | | Comparative Examples | | Examples | | | | | |
|---|---|---|---|---|---|---|---|---|---|
| | | 1 | 2 | 1 | 2 | 3 | 4 | 5 | 6 |
| Glass composition (mol%) | $Li_2O$ | 10 | 10 | 10 | 10 | 10 | 15 | 12 | 10 |
| | $Na_2O$ | 10 | 10 | 10 | 10 | 8 | 10 | 10 | – |
| | $K_2O$ | – | – | – | – | 2 | – | – | 10 |
| | $Al_2O_3$ | 2 | – | – | – | – | – | 10 | – |
| | $B_2O_3$ | 10 | 5 | 5 | – | 3 | – | 2 | 10 |
| | $TiO_2$ | 8 | 5 | 5 | 15 | 8 | 5 | 6 | 5 |
| | $SiO_2$ | 60 | 55 | 55 | 50 | 55 | 50 | 45 | 50 |
| | $ZrO_2$ | – | 2 | 3 | 4 | 7 | 6 | 5 | 4 |
| | $GeO_2$ | – | – | – | – | – | – | – | 4 |
| | $MgO$ | – | 10 | 9 | 10 | 5 | 7 | 10 | 5 |
| | $PbO$ | – | 3 | 3 | 1 | 2 | 4 | – | 2 |
| | $SnO_2$ | – | – | – | – | – | 3 | – | – |

...cont.

Table 1 (cont.)

| | | Comparative Examples | | Examples | | | | | |
|---|---|---|---|---|---|---|---|---|---|
| | | 1 | 2 | 1 | 2 | 3 | 4 | 5 | 6 |
| Ion exchange conditions | Molten salt | $NaNO_3$ | $NaNO_3$ | $NaNO_3$ | $NaNO_3$ | $NaNO_3$ | $NaNO_3$ | $NaNO_3$ | $KNO_3$ |
| | Temperature (°C) | 500 | 510 | 510 | 490 | 520 | 520 | 530 | 510 |
| | Time (hr) | 18 | 20 | 20 | 20 | 20 | 17 | 24 | 52 |
| Lens performances | central refractive index | 1.579 | 1.609 | 1.614 | 1.661 | 1.647 | 1.658 | 1.614 | 1.618 |
| | Angular aperture (°) | 9.2 | 11.7 | 12.0 | 13.5 | 12.2 | 13.0 | 12.3 | 12.5 |
| | Durability (hr) | 73 | 98 | 272 | 453 | 625 | 680 | 576 | 420 |

### Examples 7 - 11, Comparative Examples 3 - 4

Various starting materials were blended into 7 batches each providing one of the glass composition of Examples 7 - 11 and Comparative Examples 3 - 4 shown in Table 2 appearing hereinafter in an amount of 8 kg each. Each batch was sufficiently mixed, melted for 2 hours in a 3-liter platinum crucible at 1350°C, cast and rapidly cooled to form a cullet. Then, the cullet was again charged in a similar 3-liter platinum crucible, re-melted at 1300°C for four hours and then cast into a uniform glass block free of bubbles and striae. Around glass rod of 20 mm in diameter and 200 mm in length was cut out from the glass block and stretched in a glass stretching furnace to form a 1 mm diameter rod sample.

Separately, a prism sample was cut out from each glass block for measurement of refractive index and calculation of Abbe number.

Each of the glass rod samples prepared above was soaked in a molten salt bath and subjected to ion exchange under the conditions shown in Table 2, whereby gradient index lenses of Comparative Examples 3 and 4 and Examples 7 - 11 were obtained. The central refractive index and refractive index gradient of each lens were measured, and the angular aperture was calculated based on the values.

As is clear from Table 2, the replacement of a part of $TiO_2$ in the glass compositions of Comparative Examples with $Ta_2O_5$ or/and $Nb_2O_5$ gave an increased vd, thus providing a blank glass material showing a lower dispersion while retaining a large aperture. The gradient index lenses prepared from the blank glasses showed a lower dispersion than the conventional lenses and realized lenses with little refraction effect at end faces and low chromatic aberration.

Further, the lenses of Examples showed better chemical resistance compared with those of Comparative Examples and particularly better water resistance which were about 5 - 10 times those obtained by the lenses of Comparative Examples as measured in the same manner as in the previous Examples.

Table 2

| | | Comparative Examples | | Examples | | | | |
|---|---|---|---|---|---|---|---|---|
| | | 3 | 4 | 7 | 8 | 9 | 10 | 11 |
| Glass composition (mol%) | $Li_2O$ | 15 | 10 | 15 | 15 | 15 | 10 | 10 |
| | $Na_2O$ | 10 | - | 10 | 10 | 10 | - | - |
| | $K_2O$ | - | 10 | - | - | - | 10 | 10 |
| | $Al_2O_3$ | - | 1 | - | - | - | 1 | 1 |
| | $B_2O_3$ | 7 | - | 7 | 7 | 7 | - | - |
| | $SiO_2$ | 50 | 55 | 50 | 50 | 50 | 55 | 55 |
| | $ZrO_2$ | - | - | 3 | 3 | 3 | 5 | 5 |
| | $GeO_2$ | - | 2 | - | - | - | 2 | 2 |
| | $MgO$ | 3 | - | 3 | 3 | 3 | - | - |
| | $PbO$ | - | 5 | - | - | - | 5 | 5 |
| | $SnO_2$ | - | 2 | - | - | - | 2 | 2 |
| | $TiO_2$ | 15 | 15 | 6 | 6 | 8 | 4 | 6 |
| | $Ta_2O_5$ | - | - | 6 | - | 2 | 6 | 2 |
| | $Nb_2O_5$ | - | - | - | 6 | 2 | - | 2 |

...Cont.

Table 2 (cont.)

| | | Comparative Examples | | Examples | | | | |
|---|---|---|---|---|---|---|---|---|
| | | 3 | 4 | 7 | 8 | 9 | 10 | 11 |
| Optical properties of blank glass | $n_d$ | 1.652 | 1.669 | 1.691 | 1.687 | 1.687 | 1.693 | 1.682 |
| | $\nu_d$ | 32.2 | 33.0 | 36.3 | 35.8 | 36.5 | 36.1 | 35.9 |
| Ion-exchange conditions | Molten salt | $NaNO_3$ | $KNO_3$ | $NaNO_3$ | $NaNO_3$ | $NaNO_3$ | $KNO_3$ | $KNO_3$ |
| | Temperature (°C) | 500 | 520 | 500 | 500 | 500 | 520 | 520 |
| | Time (hr) | 25 | 40 | 25 | 25 | 25 | 40 | 40 |
| Angular aperture of lens (°) | | 13.2 | 12.5 | 13.4 | 13.1 | 13.4 | 12.2 | 12.4 |

# 0 287 345

## Claims

1. A glass composition for gradient index lenses, comprising the following components at the respectively specified proportions in terms of percents by mol:

| | |
|---|---|
| $LiO_2$ | 3 - 22 %, |
| $Na_2O$ | 0 - 20 %, |
| $K_2O$ | 0 - 20 % (with proviso that $Na_2O + K_2O = 3 - 20$ %), |
| $Al_2O_3$ | 0 - 20 %, |
| $B_2O_3$ | 0 - 25 %, |
| $TiO_2$ | 2 - 25 %, |
| $SiO_2$ | 40 - 62 %, |
| $ZrO_2$ | 3 - 10 %, |
| $GeO_2$ | 0 - 20 %, |
| $MgO$ | 0 - 20 %, |
| $nO_2$ | 0 - 10 %, and |
| $PbO$ | 0 - 15 %. |

2. A glass composition according to Claim 1, which contains 8 - 20 mol % of $Li_2O$, 4 - 10 mol % of $ZrO_2$ and 1 - 5 mol % of $SnO_2$, the total content of $ZrO_2$ and $SnO_2$ being 5 - 12 mol %.

3. A glass composition according to Claim 1 or 2, which further contains 0 - 10 mol % of $Ta_2O_5$ and 0 - 10 mol % of $Nb_2O_5$, the total content of $Ta_2O_5$ and $Nb_2O_5$ being 1 - 15 mol %.

4. A glass composition according to Claim 3, which contains 8 - 20 mol % of $Li_2O$, 2 - 20 mol % of $TiO_2$, 1 - 10 mol % of $Ta_2O_5$, 1 - 10 mol % of $Nb_2O_5$, the total content of $TiO_2$, $Ta_2O_5$ and $Nb_2O_5$ being 4 - 32 mol %.

5. A method of preparing a gradient index lens, which comprises subjecting to ion-exchange a shaped body of a glass composition in a molten salt bath of at least one salt selected from a sodium salt and a potassium salt, said glass composition comprising the following components at the respectively specified proportions in terms of percents by mol:

| | |
|---|---|
| $Li_2O$ | 3 - 22 %, |
| $Na_2O$ | 0 - 20 %, |
| $K_2O$ | 0 - 20 % (with proviso that $Na_2O + K_2O = 3 - 20$ %), |
| $Al_2O_3$ | 0 - 20 %, |
| $B_2O_3$ | 0 - 25 %, |
| $TiO_2$ | 2 - 25 %, |
| $SiO_2$ | 40 - 62 %, |
| $ZrO_2$ | 3 - 10 %, |
| $GeO_2$ | 0 - 20 %, |
| $MgO$ | 0 - 20 %, |
| $SnO_2$ | 0 - 10 %, and |
| $PbO$ | 0 - 15 %. |

6. A method according to Claim 5, wherein said sodium salt is $NaNO_3$.

7. A method according to Claim 5, wherein said potassium salt is $KNO_3$.

8. A method according to any of claims 5, 6 and 7, wherein the composition contains 8 - 20 mol % of $Li_2O$, 4 - 10 % of $ZrO_2$ and 1 - 5 mol % of $SnO_2$, the total content of $ZrO_2$ and $SnO_2$ being 5 - 12 mol %.

9. A method according to any of Claims 5 to 8, wherein the composition further contains 0 - 10 mol % of $Ta_2O_5$ and 0 - 10 mol % of $Nb_2O_5$, the total content of Ta and $Nb_2O_5$ being 1 - 15 mol %.

10. A method according to Claim 9, wherein the composition contains 8 - 20 mol % of $Li_2O$, 2 - 20 mol % of $TiO_2$, 1 - 10 mol % of $Ta_2O_5$, 1 - 10 mol % of $Nb_2O_5$, the total content of $TiO_2$, $Ta_2O_5$ and $Nb_2O_5$ being 4 - 32 mol %.

11. A gradient index lens in the form of a cylinder having a refractive index gradient in the radial direction, which has been prepared by subjecting to ion-exchange a cylinder of a glass composition in a molten salt bath of at least one salt selected from a sodium salt and a potassium salt, said glass composition comprising the following components at the respectively specified proportions in terms of percents by mol:

| | |
|---|---|
| $Li_2O$ | 3 - 22 %, |
| $Na_2O$ | 0 - 20 %, |
| $K_2O$ | 0 - 20 % (with proviso that $Na_2O + K_2O = 3 - 20$ %), |
| $Al_2O_3$ | 0 - 20 %, |
| $B_2O_3$ | 0 - 25 %, |
| $TiO_2$ | 2 - 25 %, |
| $SiO_2$ | 40 - 62 %, |
| $ZrO_2$ | 3 - 10 %, |

GeO$_2$    0 - 20 %,
MgO    0 - 20 %,
SnO$_2$    0 - 10 %, and
PbO    0 - 15 %.

12. A lens according to Claim 11, wherein about 30 - 80 % of the Li$_2$O content in the glass composition has been replaced by the corresponding molar amount in total of the oxide of at least one of sodium and potassium.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 898 093 (M. FAULSTICH et al.) * Claim 1; table 2; column 2, lines 43-44 * | 1-5,11-12 | C 03 C 3/076 C 03 C 21/00 C 03 C 3/093 |
| X | CHEMICAL ABSTRACTS, vol. 102, no. 22, June 1985, page 293, no. 189714z, Columbus, Ohio, US; & JP-A-60 05 037 (OHARA OPTICAL GLASS MFG., CO., LTD) 11-01-1985 * Whole abstract * | 1-5,7, 11-12 | |
| X | CHEMICAL ABSTRACTS, vol. 96, no. 22, May 1982, page 336, no. 186179a, Columbus, Ohio, US; & JP-A-82 22 139 (NIPPON SHEET GLASS CO., LTD) 05-02-1982 * Whole abstract * | 1-6,11-12 | |

TECHNICAL FIELDS SEARCHED (Int. Cl.4)

C 03 C

The present search report has been drawn up for all claims

| Place of search | Date of completion of the search | Examiner |
|---|---|---|
| THE HAGUE | 18-07-1988 | BOUTRUCHE J.P.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)